# EUROPÄISCHE PATENTSCHRIFT

(11) **EP 3 736 192 B1**
(45) Veröffentlichungstag und Bekanntmachung des Hinweises auf die Patenterteilung: **05.04.2023**
(21) Anmeldenummer: 20168647.4
(22) Anmeldetag: 08.04.2020
(51) Int. Cl.: B61C 7/04, B61C 9/10, B61C 9/30

(54) **HYBRIDANTRIEB FÜR EIN SCHIENENFAHRZEUG**
HYBRID DRIVE FOR A RAIL VEHICLE
ENTRAÎNEMENT HYBRIDE POUR UN VÉHICULE FERROVIAIRE

(30) Priorität: 07.05.2019 DE 102019206551
(43) Veröffentlichungstag der Anmeldung: 11.11.2020
(73) Patentinhaber: ZF Friedrichshafen AG, 88046 Friedrichshafen (DE)
(72) Erfinder: Kettlitz, Mario, 88250 Weingarten (DE)
(74) Vertreter: ZF Friedrichshafen AG

(56) Entgegenhaltungen:
- CN-U- 206 813 009
- CN-U- 207 842 674
- DE-A1- 2 500 506
- DE-A1-102009 045 848
- DE-A1-102016 214 404
- DE-B- 1 070 665

## Beschreibung

Die vorliegende Erfindung betrifft einen Hybridantrieb für ein Schienenfahrzeug gemäß dem Oberbegriff des Anspruchs 1.

Bei einer verbreiteten und in der Praxis bewährten Antriebsanordnung für Schienenfahrzeuge werden zwei Treibachsen, die einem gemeinsamen Drehgestellrahmen zugeordnet sind, über einen Antriebsstrang angetrieben. Eine solche Antriebsanordnung für Schienenfahrzeuge ist aus der DE 198 27 580 A1 bekannt. Eine Verbrennungskraftmaschine treibt dabei über ein Schaltgetriebe, eine Gelenkwelle, ein Achswendegetriebe und ein Achsgetriebe zwei Treibachsen an. Der ersten Treibachse ist dabei ein Achswendegetriebe zugeordnet, das ein schaltbares Wendegetriebe in Stirnradbauweise und einen Kegelradsatz umfasst. Die zweite Treibachse wird über eine Abtriebswelle des Achswendegetriebes der ersten Treibachse mit angetrieben.

Eine derartige Antriebsanordnung wurde in einer erweiterten Form als Schienenfahrzeughybridantrieb in der DE 10 2009 045 848 A1 beschrieben. Bei einem Fahrzeughybridantrieb sind mindestens zwei Energieumwandler und in der Regel zwei im Fahrzeug eingebaute Energiespeichersysteme vorhanden, um das Fahrzeug anzutreiben. Als Energieumwandler werden dabei in der Regel eine Verbrennungskraftmaschine und ein weiterer Antriebsmotor, häufig eine elektrische Maschine, verwendet. Der weitere Antriebsmotor ermöglicht insbesondere bei einem Betrieb mit vielen Start-Stopp-Phasen eine Rückgewinnung von Bremsenergie, eine Reduzierung des Kraftstoffverbrauchs und eine Verringerung von Abgasemissionen. Der in der DE 10 2009 045 848 A1 beschriebene Schienenfahrzeughybridantrieb weist als weiteren Antriebsmotor einen Hybridmotor auf, der unmittelbar an dem Achsgetriebe der zweiten Treibachse angeordnet ist, um möglichst wenig Bauraum zu beanspruchen.

Aus der DE 10 70 665 B ist eine Antriebsanlage für ein Schienenfahrzeug bekannt, bei der mehrere Antriebsmaschinen vorgesehen sind. Beispielsweise kann ein Verbrennungsmotor als Hauptantriebsanlage vorgesehen sein und jeweils ein Elektromotor treibt zusätzlich einen von mehreren Radsätzen an. Die Elektromotoren können sich dabei beispielsweise in Form eines Tatzlagermotors auf dem Radsatz abstützen oder im Drehgestellrahmen gelagert sein.

Ferner zeigt die CN 207 842 674 U eine Ausführung eines Hybridantriebs, bei dem eine erste und eine zweite Treibachse eines Fahrzeugs über je ein Achsgetriebe von einem Verbrennungsmotor antreibbar sind. Zusätzlich ist ein Elektromotor als weitere Antriebsmaschine mit dem Achsgetriebe der zweiten Treibachse verbunden.

Die Aufgabe der vorliegenden Erfindung ist es einen derartigen Hybridantrieb für ein Schienenfahrzeug weiter zu verbessern, insbesondere im Hinblick auf einen komfortablen Fahrbetrieb und einen hohen Wirkungsgrad.

Diese Aufgabe wird durch einen Hybridantrieb für ein Schienenfahrzeug mit den Merkmalen von Anspruch 1 gelöst. Vorteilhafte Ausführungen sind in den abhängigen Ansprüchen angegeben.

Es wird ein Hybridantrieb für ein Schienenfahrzeug vorgeschlagen, der einen Verbrennungsmotor, ein Wechselgetriebe, eine erste Treibachse mit einem ersten Achsgetriebe und eine zweite Treibachse mit einem zweiten Achsgetriebe umfasst. Die erste Treibachse und die zweite Treibachse sind dabei durch den Verbrennungsmotor antreibbar. Der Verbrennungsmotor kann insbesondere als Dieselmotor ausgeführt sein. Das Wechselgetriebe ermöglicht es verschiedene Übersetzungsverhältnisse einzustellen. Das Wechselgetriebe kann beispielsweise als Stufenschaltgetriebe, als Automatgetriebe oder als hydrodynamisches Getriebe ausgeführt sein. Das Wechselgetriebe kann direkt an dem Antriebsmotor befestigt oder über eine Verbindungswelle mit einer Motorabtriebswelle verbunden sein.

Eine Abtriebswelle des Wechselgetriebes ist mit einer Eingangswelle des ersten Achsgetriebes verbunden, um die Antriebsleistung des Verbrennungsmotors über das Wechselgetriebe zu der ersten Treibachse weiterzuleiten. Zum Antrieb der zweiten Treibachse ist vorgesehen, dass eine Ausgangswelle des ersten Achsgetriebes mit einer ersten Eingangswelle des zweiten Achsgetriebes verbunden ist. Eine solche Verbindung kann beispielsweise mithilfe einer Verbindungswelle realisiert werden. Eine derartige Anordnung, bei der das erste Achsgetriebe als Achswendegetriebe ausgeführt ist, ist in der eingangs erwähnten DE 198 27 580 A1 beschrieben und seit vielen Jahren in vielen Schienenfahrzeugen zuverlässig im Einsatz.

Gemäß der vorliegenden Erfindung ist nun vorgesehen, dass eine elektrische Maschine mittels eines versatzausgleichenden Elements mit einer zweiten Eingangswelle des zweiten Achsgetriebes verbunden ist, und dass der Verbrennungsmotor und die elektrische Maschine an einem Wagenkasten des Schienenfahrzeugs aufgehängt sind. Der Wagenkasten gehört zu den gefederten Massen eines Schienenfahrzeugs, weil er gegenüber den Radsätzen und den Drehgestellen schwingungstechnisch entkoppelt bzw. gefedert ist. Der Begriff Wagenkasten beschreibt hier nicht zwangsläufig nur streng kastenförmige Elemente, sondern umfasst auch tragende Rahmenstrukturen eines Schienenfahrzeugs, die gegenüber den Radsätzen gefedert sind.

Durch die Aufhängung des Verbrennungsmotors und der elektrischen Maschine an dem gefederten Wagenkasten sind die ungefederten Massen erheblich geringer, als bei Lösungen, bei denen die elektrische Maschine als Teil der ungefederten Massen an dem zweiten Achsgetriebe befestigt ist. Bevorzugt ist auch das Wechselgetriebe unmittelbar oder über den Verbrennungsmotor an dem Wagenkasten aufgehängt. Die geringe ungefederte Masse führt zu einem verbesserten Schwingungsverhalten und zu einem ruhigeren Fahrverhalten des Schienenfahrzeugs mit geringerer Geräuschbildung. Der Fahrkomfort für die Passagiere ist verbessert.

Die mit der zweiten Eingangswelle des zweiten Achsgetriebes verbundene elektrische Maschine erlaubt neben dem rein verbrennungsmotorischen Fahrbetrieb auch einen rein elektrischen Fahrbetrieb und einen Fahrbetrieb, bei dem das Schienenfahrzeug gleichzeitig durch beide Antriebe angetrieben wird. Die elektrische Maschine kann durch einen elektrischen Energiespeicher im Schienenfahrzeug und/oder durch eine Oberleitungsverbindung gespeist werden.

Der vorgeschlagene Hybridantrieb lässt sich unter Verwendung von bereits entwickelten und in der Praxis bewährten Achsgetrieben mit geringem Mehraufwand realisieren. Es ist dazu beispielsweise kein aufwändiges Summier- oder Verteilergetriebe erforderlich.

Vorzugsweise ist das versatzausgleichende Element als Gelenkwelle ausgeführt. Eine solche Gelenkwelle kann einen Längenausgleich aufweisen, um Versätze zwischen dem zweiten Achsgetriebe und der elektrischen Maschine in verschiedenen Richtungen ausgleichen zu können und gleichzeitig das Antriebsdrehmoment zuverlässig zu übertragen. Für verschiedene Anwendungen kann jeweils gezielt eine Gelenkwelle mit passenden Abmessungen und ausreichendem Längenausgleich ausgewählt werden, was beispielsweise bei der Auswahl einer geeigneten Befestigungsposition der elektrischen Maschine an dem jeweiligen Wagenkasten eine gewisse konstruktive Freiheit offenlässt.

Das erste und das zweite Achsgetriebe umfassen jeweils eine Stirnradstufe und eine Kegelradstufe, wobei die Kegelradstufe vorzugsweise als Hypoidgetriebe ausgeführt ist, also mit einem Achsversatz zwischen den Rotationsachsen des Kegelritzels und des Tellerrades. Eine solche Anordnung hat sich in der Praxis bewährt und eignet sich insbesondere für eine typische Anordnung bzw. Ausrichtung des Verbrennungsmotors und Wechselgetriebes in Fahrzeuglängsrichtung. Über die gezielte Auswahl einer geeigneten Übersetzung in der Stirnradstufe und der Kegelradstufe kann eine für die jeweilige Anwendung gewünschte Gesamtübersetzung erzielt werden.

Erfindungsgemäß ist die Ausgangswelle des ersten Achsgetriebes als Kegelritzelwelle ausgebildet. Dabei ist an einem Ende der Kegelritzelwelle ein Kegelritzel der Kegelradstufe des ersten Achsgetriebes verdrehfest angeordnet. Das Kegelritzel ist im Eingriff mit einem auf der Radsatzwelle der ersten Treibachse befestigten Tellerrad. Das andere Ende der Kegelritzelwelle ist über die Verbindungswelle mit der ersten Eingangswelle des zweiten Achsgetriebes verbunden. Bei einer solchen Ausführung können herkömmliche Achsgetriebe verwendet werden, wodurch zusätzlicher Entwicklungsaufwand gespart wird und kostengünstige Ausführungen möglich sind. Ferner sind Nachrüstungen in bestehenden Schienenfahrzeugen mit geringem konstruktivem Aufwand möglich, weil der Bauraum für die herkömmlichen Achsgetriebe häufig bereits vorgesehen ist. Gemäß der Erfindung ist ferner vorgesehen, dass die erste Eingangswelle des zweiten Achsgetriebes ebenfalls als Kegelritzelwelle ausgebildet ist, auf der ein Kegelritzel der Kegelradstufe des zweiten Achsgetriebes verdrehfest angeordnet ist. Dies ermöglicht eine baugleiche Ausführung des ersten und des zweiten Achsgetriebes.

Gemäß einer anderen Ausführung kann vorgesehen sein, dass die beiden Achsgetriebe verschiedene Übersetzungen in der Stirnradstufe aufweisen. Vorzugsweise weist dabei die Stirnradstufe des ersten Achsgetriebes eine kleinere Übersetzung auf als die Stirnradstufe des zweiten Achsgetriebes. Damit können die typischerweise höheren Drehzahlen der elektrischen Maschine auf das gleiche Drehzahlniveau an dem jeweiligen Radsatz übersetzt werden wie die Drehzahlen, die von dem Verbrennungsmotor mit der Übersetzung im Wechselgetriebe zur Verfügung gestellt werden. Eine typische, als Fahrzeugantrieb verwendete elektrische Maschine arbeitet vorzugsweise im Drehzahlbereich von 0 bis 8000 Umdrehungen pro Minute, die Dieselmaschine dagegen in einem Drehzahlbereich von 0 bis 2000 Umdrehungen pro Minute. Es kann daher sinnvoll sein, dass sich die Übersetzungen der Stirnradstufen in etwa um den Faktor 4 unterscheiden, wobei die Übersetzungen der Kegelradstufen gleich sind.

Antriebsstränge von Schienenfahrzeugen weisen entweder ein räumlich getrennt angeordnetes Wendegetriebe oder eine in einem anderen Getriebe integrierte Wendestufe auf, um der Anforderung an gleichwertige Fahrtrichtungen gerecht zu werden. Das heißt, dass in zwei Fahrtrichtungen, vorwärts und rückwärts, jeweils die gleichen Übersetzungen und damit die gleichen Geschwindigkeitsbereiche zur Verfügung stehen. Auch im Zusammenhang mit der vorliegenden Erfindung sind grundsätzlich die beiden genannten Alternativen möglich. Eine Ausführung, bei der das Wechselgetriebe unmittelbar oder über den Verbrennungsmotor an dem Wagenkasten aufgehängt ist und eine Wendestufe zum Fahrtrichtungswechsel aufweist, hat jedoch die Vorteile, dass ein kompakter Aufbau gegeben ist und dass die ungefederten Massen weiter verringert werden.

In einer weiteren Ausführungsform der Erfindung ist vorgesehen, dass das erste und/oder das zweite Achsgetriebe eine Schaltkupplung zum Trennen des Antriebsstrangs aufweist. Dies soll insbesondere dazu genutzt werden, um bei einem Fahrbetrieb mit nur einem der beiden Antriebsmotoren den Antriebsstrang des jeweils anderen Antriebsmotors möglichst nahe an der jeweiligen Treibachse abzukoppeln. Dadurch muss jeweils nur ein geringerer Teil des nicht antreibenden Antriebsstrangs mitgeschleppt werden. Folglich treten geringere Schleppverluste auf und es ist ein verbesserter Wirkungsgrad erreichbar.

Der Gesamtwirkungsgrad des Hybridantriebs kann weiter verbessert und der Herstellungsaufwand verringert werden wenn, gemäß einer weiteren Ausführungsform, der Verbrennungsmotor, das Wechselgetriebe und die elektrische Maschine durch einen gemeinsamen Wasserkühlkreislauf gekühlt werden.

Im Folgenden werden die Erfindung und die damit erzielbaren Vorteile anhand der anliegenden Figuren beispielhaft näher erläutert. Dabei zeigen
- Fig. 1: eine erste Ausführungsform eines erfindungsgemäßen Hybridantriebs und
- Fig. 2: eine Ausführungsform eines nicht erfindungsgemäßen Hybridantriebs.

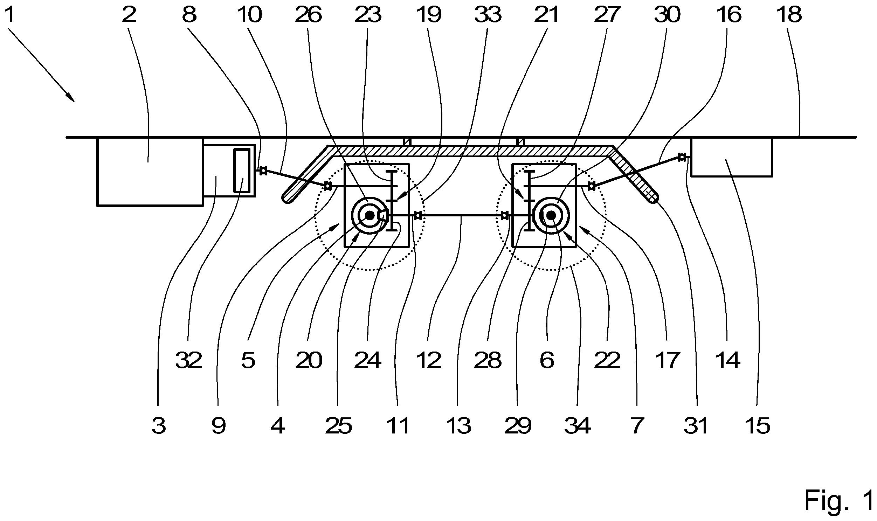

Die der in Fig. 1 gezeigten Ausführungsform des Hybridantriebs 1 für ein Schienenfahrzeug umfasst einen Verbrennungsmotor 2, ein Wechselgetriebe 3, eine erste Treibachse 4 mit einem ersten Achsgetriebe 5 und eine zweite Treibachse 6 mit einem zweiten Achsgetriebe 7. Die erste Treibachse 4 mit dem ersten Achsgetriebe 5 und die zweite Treibachse 6 mit dem zweiten Achsgetriebe 7 sind einem gemeinsamen Triebdrehgestell 31 zugeordnet.

Das Wechselgetriebe 3 ist an den Verbrennungsmotor 2 befestigt und somit gemeinsam mit dem Verbrennungsmotor 2 an einem Wagenkasten 18 befestigt. Das Wechselgetriebe 2 kann in anderen Ausführungen auch räumlich beabstandet von dem Verbrennungsmotor 2 angeordnet und direkt an dem Wagenkasten 18 befestigt oder aufgehängt sein. Das Wechselgetriebe 3 weist eine Wendestufe 32 zum Fahrtrichtungswechsel auf. Aus diesem Grund ist an keinem der Achsgetriebe 5, 7 eine Wendestufe bzw. ein Wendegetriebe erforderlich, wodurch beide Achsgetriebe 5, 7 eine geringe ungefederte Masse bilden.

Die erste Treibachse 4 und die zweite Treibachse 6 sind durch den Verbrennungsmotor 2 über das Wechselgetriebe 3 antreibbar. Dazu ist eine Abtriebswelle 8 des Wechselgetriebes 3 über eine Gelenkwelle 10 mit einer Eingangswelle 9 des ersten Achsgetriebes 5 verbunden. Eine Ausgangswelle 11 des ersten Achsgetriebes 5 ist wiederum mithilfe einer Verbindungswelle 12 mit einer ersten Eingangswelle 13 des zweiten Achsgetriebes 7 verbunden, sodass das zweite Achsgetriebe 7 von dem Verbrennungsmotor 2 über das Wechselgetriebe 3 und das erste Achsgetriebe 5 antreibbar ist. Auch die Verbindungswelle 12 ist als Gelenkwelle ausgeführt, um Relativbewegungen zwischen dem ersten und dem zweiten Achsgetriebe 5, 7 ausgleichen zu können.

Zur Realisierung eines Hybridantriebs ist eine Motorwelle 14 einer elektrische Maschine 15 mittels einem versatzausgleichenden Element 16 in Form einer weiteren Gelenkwelle mit einer zweiten Eingangswelle 17 des zweiten Achsgetriebes 7 verbunden. So können also die erste Treibachse 4 und die zweite Treibachse 6 sowohl von dem Verbrennungsmotor 2 als auch von der elektrischen Maschine 15 angetrieben werden. Die Gelenkwelle 16 weist einen Längenausgleich auf, sodass Versätze, d.h. Relativbewegungen zwischen dem zweiten Achsgetriebe 7 und der elektrischen Maschine 15 in verschiedenen Richtungen ausgeglichen werden können. Derartige Versätze entstehen im Wesentlichen deshalb, weil das zweite Achsgetriebe 7 als ungefederte Masse am Radsatz angeordnet ist, wogegen die elektrische Maschine 15 am Wagenkasten 18 gefedert aufgehängt ist.

Das erste Achsgetriebe 5 weist eine Stirnradstufe 19 auf, die aus einem ersten Stirnrad 23 und aus einem zweiten Stirnrad 24 besteht. Ferner weist das erste Achsgetriebe 5 eine Kegelradstufe 20 auf. Die Kegelradstufe 20 besteht im Wesentlichen aus einem Kegelritzel 25, das verdrehfest auf einer Kegelritzelwelle angeordnet ist, sowie aus einem Tellerrad 26, welches verdrehfest auf einer Radsatzwelle der ersten Treibachse 4 angeordnet ist. Die Kegelradstufe 20 überträgt demnach die Antriebsleistung aus dem ersten Achsgetriebe 5 auf die Radsatzwelle der ersten Treibachse 4 und lenkt den Kraftfluss dabei von der Längsrichtung des Schienenfahrzeugs in die Querrichtung um. Die Kegelritzelwelle bildet gleichzeitig die Ausgangswelle 11 des ersten Achsgetriebes 5. Über die Ausgangswelle 11 des ersten Achsgetriebes 5 wird ein Teil der Antriebsleistung über die Verbindungswelle 12 auf das zweite Achsgetriebe 7 und zu der zweiten Treibachse 6 übertragen.

Die Verbindungswelle 12 ist antriebsseitig mit der Ausgangswelle 11 des ersten Achsgetriebes 5 und abtriebsseitig mit einer ersten Eingangswelle 13 des zweiten Achsgetriebes 7 verbunden. Auch das zweite Achsgetriebe 7 weist eine Stirnradstufe 21 und eine Kegelradstufe 22 auf. Die Kegelradstufe 22 überträgt die Antriebsleistung aus dem zweiten Achsgetriebe 7 auf die Radsatzwelle der zweiten Treibachse 6. Eine Kegelritzelwelle der Kegelradstufe 22 bildet die erste Eingangswelle 13 des zweiten Achsgetriebes 7. Auf dieser Kegelritzelwelle ist das Kegelritzel 29 der Kegelradstufe 22 verdrehfest angeordnet. Das Kegelritzel 24 ist im Eingriff mit einem Tellerrad 30, welches verdrehfest auf der Radsatzwelle der zweiten Treibachse 6 angeordnet ist und diese im Fahrbetrieb antreibt. Auf den Radsatzwellen der beiden Treibachsen 4 und 6 sind jeweils zwei Antriebsräder 33, 34 des Schienenfahrzeugs verdrehfest angeordnet.

Über die Stirnradstufe 21 wird im elektrischen oder teilelektrischen Fahrbetrieb eine Antriebsleistung der elektrischen Maschine 15 zu der ersten und zweiten Treibachse 4 und 6 übertragen. Ein erstes Stirnrad 27 der Stirnradstufe 21 ist verdrehfest auf einer zweiten Eingangswelle 17 des zweiten Achsgetriebes 7 angeordnet. Die zweite Eingangswelle 17 ist mittels des versatzausgleichenden Elements 16 in Form einer weiteren Gelenkwelle antriebswirksam verbunden mit einer Motorwelle 14 der elektrischen Maschine 15. Das erste Stirnrad 27 der Stirnradstufe 21 ist im Eingriff mit einem zweiten Stirnrad 28 des zweiten Achsgetriebes 7, welches wiederum verdrehfest auf der ersten Eingangswelle 13 des zweiten Achsgetriebes 7 angeordnet ist. Somit ist es möglich mithilfe der als Motor betriebenen elektrischen Maschine 15 die zweite Treibachse 6 und, über die Verbindungswelle 12, auch die erste Treibachse 4 anzutreiben.

Die Stirnradstufe 19 des ersten Achsgetriebes 5 weist in diesem Ausführungsbeispiel eine kleinere Übersetzung auf als die Stirnradstufe 21 des zweiten Achsgetriebes 7. Damit können die höheren Drehzahlen der elektrischen Maschine 15 an die von dem Verbrennungsmotor 2 mit der jeweiligen Übersetzung im Wechselgetriebe 3 zur Verfügung gestellten Drehzahlen angepasst werden.

Die elektrische Maschine 15 kann bei allen Ausführungsbeispielen dieser Erfindung jedoch auch als Generator betrieben werden, beispielsweise um Bremsenergie in elektrische Energie umzuwandeln. Die generierte elektrische Energie kann dann in einem Energiespeicher des Schienenfahrzeugs gespeichert oder in ein Stromnetz zurückgespeist werden. Im Generatorbetrieb erfüllt die zweite Eingangswelle 17 des zweiten Achsgetriebes 7 daher entsprechend der Leistungsflussrichtung die Funktion einer Ausgangswelle.

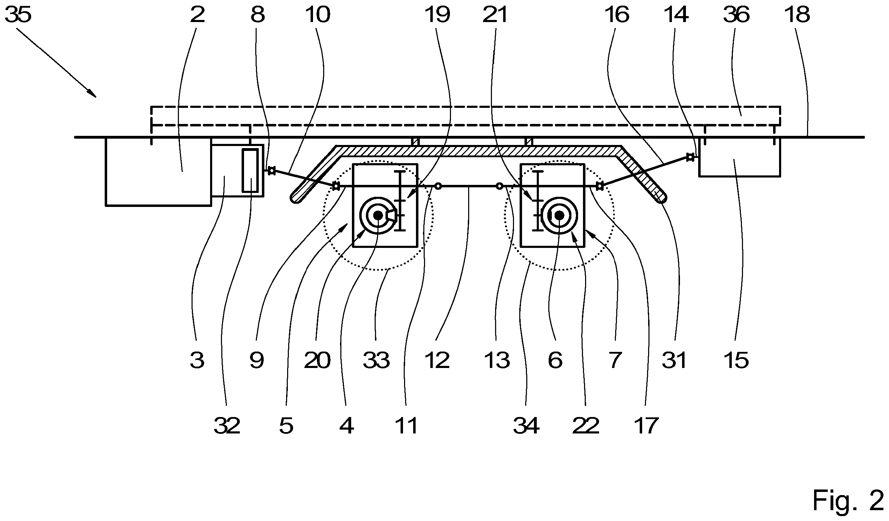

Die Fig. 2 zeigt ein Ausführungsbeispiel eines nicht erfindungsgemäßen Hybridantriebs 35, das sich im Wesentlichen nur durch eine andere Anbindungen der Verbindungswelle 12 an dem ersten Achsgetriebe 5 und dem zweiten Achsgetriebe 7 von dem Ausführungsbeispiel der Fig. 1 unterscheidet. Deshalb sind in der Fig. 1 und der Fig. 2 gleiche Bauteile mit dem gleichen Bezugszeichen versehen. Im Folgenden werden daher auch nur die von dem ersten Ausführungsbeispiel abweichenden Merkmale und Funktionen des zweiten Ausführungsbeispiels beschrieben.

Bei dem Hybridantrieb 35 ist die Ausgangswelle 11 des ersten Achsgetriebes 5 als Stirnradwelle ausgebildet. Die erste Eingangswelle 13 des zweiten Achsgetriebes 7 ist ebenfalls als Stirnradwelle ausgebildet, sodass die beiden Achsgetriebe 5, 7 also über die jeweiligen Stirnradwellen miteinander verbunden sind. Das Antriebsdrehmoment des Verbrennungsmotors 2 wird also auch über die Stirnradstufe 21 des zweiten Achsgetriebes 7 übertragen. Dadurch kann die Verbindungswelle 12 mit höherer Drehzahl und dementsprechend niedrigerem Drehmoment betrieben werden. Deshalb ist die Verbindungswelle 12 in diesem zweiten Ausführungsbeispiel schwächer ausgeführt als im ersten Ausführungsbeispiel.

Die elektrische Maschine 15 ist auch beim Hybridantrieb 35 über das versatzausgleichende Element 14 mit der Stirnradwelle des zweiten Achsgetriebes 7 verbunden. Die Stirnradwelle bildet demnach auch bei dem zweiten Ausführungsbeispiel die zweite Eingangswelle 17 des zweiten Achsgetriebes 7.

Mit Strichlinien ist ein Wasserkühlkreislauf 36 schematisch und vereinfacht dargestellt. Mit diesem Wasserkühlkreislauf 36 können der Verbrennungsmotor 2, das Wechselgetriebe 3 und die elektrische Maschine 15 gekühlt werden. Ein solcher gemeinsamer Wasserkühlkreislauf 36 kann ebenso beim ersten Ausführungsbeispiel verwendet werden. Der gemeinsame Wasserkühlkreislauf 36 ermöglicht einen Betrieb mit verbessertem Wirkungsgrad, da beispielsweise zur Kühlung des Verbrennungsmotors 2 und der elektrischen Maschine 15 nur ein Kühler erforderlich ist und nur eine Kühlmittelpumpe betrieben werden muss.

### Bezugszeichen

- 1: Hybridantrieb
- 2: Verbrennungsmotor
- 3: Wechselgetriebe
- 4: erste Treibachse
- 5: erstes Achsgetriebe
- 6: zweite Treibachse
- 7: zweites Achsgetriebe
- 8: Abtriebswelle
- 9: Eingangswelle
- 10: Gelenkwelle
- 11: Ausgangswelle
- 12: Verbindungswelle
- 13: erste Eingangswelle
- 14: Motorwelle
- 15: elektrische Maschine
- 16: versatzausgleichendes Element
- 17: zweite Eingangswelle
- 18: Wagenkasten
- 19: Stirnradstufe
- 20: Kegelradstufe
- 21: Stirnradstufe
- 22: Kegelradstufe
- 23: erstes Stirnrad
- 24: zweites Stirnrad
- 25: Kegelritzel
- 26: Tellerrad
- 27: erstes Stirnrad
- 28: zweites Stirnrad
- 29: Kegelritzel
- 30: Tellerrad
- 31: Triebdrehgestell
- 32: Wendestufe
- 33: Antriebsrad
- 34: Antriebsrad
- 35: Hybridantrieb
- 36: Wasserkühlkreislauf

## Patentansprüche

1. Hybridantrieb (1, 35) für ein Schienenfahrzeug, umfassend einen Verbrennungsmotor (2), ein Wechselgetriebe (3), eine erste Treibachse (4) mit einem ersten Achsgetriebe (5) und eine zweite Treibachse (6) mit einem zweiten Achsgetriebe (7), wobei die erste Treibachse (4) und die zweite Treibachse (6) durch den Verbrennungsmotor (2) antreibbar sind,
wobei eine Abtriebswelle (8) des Wechselgetriebes (3) mit einer Eingangswelle (9) des ersten Achsgetriebes (5) verbunden ist,
wobei eine Ausgangswelle (11) des ersten Achsgetriebes (5) mit einer ersten Eingangswelle (13) des zweiten Achsgetriebes (7) verbunden ist,
wobei eine Motorwelle (14) einer elektrischen Maschine (15) mittels eines versatzausgleichenden Elements (16) mit einer zweiten Eingangswelle (17) des zweiten Achsgetriebes (7) verbunden ist, **dadurch gekennzeichnet,**
**dass** der Verbrennungsmotor (2) und die elektrische Maschine (15) an einem Wagenkasten (18) des Schienenfahrzeugs aufgehängt sind, dass das erste und das zweite Achsgetriebe (5, 7) jeweils eine Stirnradstufe (19, 21) und eine Kegelradstufe (20, 22) umfassen, dass die Ausgangswelle (11) des ersten Achsgetriebes (5) als Kegelritzelwelle ausgebildet ist, auf der ein Kegelritzel (25) der Kegelradstufe (20) des ersten Achsgetriebes (5) verdrehfest angeordnet ist, und dass die erste Eingangswelle (13) des zweiten Achsgetriebes (7) als Kegelritzelwelle ausgebildet ist, auf der ein Kegelritzel (29) der Kegelradstufe (22) des zweiten Achsgetriebes (7) verdrehfest angeordnet ist.

2. Hybridantrieb (1, 35) nach Anspruch 1, **dadurch gekennzeichnet, dass** das versatzausgleichenden Element (16) als Gelenkwelle ausgeführt ist.

3. Hybridantrieb (1) nach einem der Ansprüche 1 oder 2, **dadurch gekennzeichnet, dass** die Stirnradstufe (19) des ersten Achsgetriebes (5) eine kleinere Übersetzung aufweist als die Stirnradstufe (20) des zweiten Achsgetriebes.

4. Hybridantrieb (1, 35) nach einem der Ansprüche 1 oder 2, **dadurch gekennzeichnet, dass** das erste Achsgetriebe (5) und das zweite Achsgetriebe (7) baugleich ausgeführt sind.

5. Hybridantrieb (1, 35) nach einem der vorgenannten Ansprüche, **dadurch gekennzeichnet, dass** das Wechselgetriebe (3) eine Wendestufe (32) zum Fahrtrichtungswechsel aufweist.

6. Hybridantrieb (1, 35) nach einem der vorgenannten Ansprüche, **dadurch gekennzeichnet, dass** der Verbrennungsmotor (2), das Wechselgetriebe (3) und die elektrische Maschine (15) durch einen gemeinsamen Wasserkühlkreislauf (36) gekühlt werden.

## Claims

1. Hybrid drive (1, 35) for a rail vehicle, comprising an internal combustion engine (2), a variable speed transmission (3), a first drive axle (4) with a first axle drive (5) and a second drive axle (6) with a second axle drive (7), wherein the first drive axle (4) and the second drive axle (6) can be driven by the internal combustion engine (2),
wherein a driven shaft (8) of the variable speed transmission (3) is connected to an input shaft (9) of the first axle drive (5),
wherein an output shaft (11) of the first axle drive (5) is connected to a first input shaft (13) of the second axle drive (7),
wherein a motor shaft (14) of an electric motor (15) is connected to a second input shaft (17) of the second axle drive (7) by means of an offset-compensating element (16), **characterized**
**in that** the internal combustion engine (2) and the electric motor (15) are suspended on a wagon body (18) of the rail vehicle, in that the first and the second axle drive (5, 7) each comprise a spur gear stage (19, 21) and a bevel gear stage (20, 22), in that the output shaft (11) of the first axle drive (5) is in the form of a bevel pinion shaft on which a bevel pinion (25) of the bevel gear stage (20) of the first axle drive (5) is arranged for conjoint rotation, and in that the first input shaft (13) of the second axle drive (7) is in the form of a bevel pinion shaft on which a bevel pinion (29) of the bevel gear stage (22) of the second axle drive (7) is arranged for conjoint rotation.

2. Hybrid drive (1, 35) according to Claim 1, **characterized in that** the offset-compensating element (16) is designed as a propeller shaft.

3. Hybrid drive (1) according to either of Claims 1 and 2, **characterized in that** the spur gear stage (19) of the first axle drive (5) has a smaller transmission ratio than the spur gear stage (20) of the second axle drive.

4. Hybrid drive (1, 35) according to either of Claims 1 and 2, **characterized in that** the first axle drive (5) and the second axle drive (7) are constructionally identical.

5. Hybrid drive (1, 35) according to one of the preceding claims, **characterized in that** the variable speed transmission (3) has a reversing stage (32) for changing the direction of travel.

6. Hybrid drive (1, 35) according to one of the preceding claims, **characterized in that** the internal combustion engine (2), the variable speed transmission (3) and the electric motor (15) are cooled by a common water cooling circuit (36).

## Revendications

1. Entraînement hybride (1, 35) pour un véhicule ferroviaire, comprenant un moteur à combustion interne (2), une boîte de vitesses (3), un premier essieu moteur (4) avec une première boîte d'essieu (5) et un deuxième essieu moteur (6) avec une deuxième boîte d'essieu (7), le premier essieu moteur (4) et le deuxième essieu moteur (6) pouvant être entraînés par le moteur à combustion interne (2),
un arbre mené (8) de la boîte de vitesses (3) étant relié à un arbre d'entrée (9) de la première boîte d'essieu (5),
un arbre de sortie (11) de la première boîte d'essieu (5) étant relié à un premier arbre d'entrée (13) de la deuxième boîte d'essieu (7),
un arbre de moteur (14) d'une machine électrique (15) étant relié à un deuxième arbre d'entrée (17) de la deuxième boîte d'essieu (7) au moyen d'un élément de compensation de décalage (16), **caractérisé en ce que** le moteur à combustion interne (2) et la machine électrique (15) sont suspendus à une caisse (18) du véhicule ferroviaire, **en ce que** la première et la deuxième boîte d'essieu (5, 7) comprennent chacune un étage d'engrenages droits (19, 21) et un étage d'engrenages coniques (20, 22), **en ce que** l'arbre de sortie (11) de la première boîte d'essieu (5) est configuré sous forme d'arbre à pignons coniques, sur lequel un pignon conique (25) de l'étage d'engrenages coniques (20) de la première boîte d'essieu (5) est agencé de manière immobile en rotation, et **en ce que** le premier arbre d'entrée (13) de la deuxième boîte d'essieu (7) est configuré sous forme d'arbre à pignons coniques sur lequel un pignon conique (29) de l'étage d'engrenages coniques (22) de la deuxième boîte d'essieu (7) est agencé de manière immobile en rotation.

2. Entraînement hybride (1, 35) selon la revendication 1, **caractérisé en ce que** l'élément de compensation de décalage (16) est réalisé sous forme d'arbre articulé.

3. Entraînement hybride (1) selon l'une quelconque des revendications 1 ou 2, **caractérisé en ce que** l'étage d'engrenages droits (19) de la première boîte d'essieu (5) présente un rapport de transmission plus petit que l'étage d'engrenages droits (20) de la deuxième boîte d'essieu.

4. Entraînement hybride (1, 35) selon l'une quelconque des revendications 1 ou 2, **caractérisé en ce que** la première boîte d'essieu (5) et la deuxième boîte d'essieu (7) sont de construction identique.

5. Entraînement hybride (1, 35) selon l'une quelconque des revendications précédentes, **caractérisé en ce que** la boîte de vitesses (3) présente un étage d'inversion (32) pour l'inversion du sens de marche.

6. Entraînement hybride (1, 35) selon l'une quelconque des revendications précédentes, **caractérisé en ce que** le moteur à combustion interne (2), la boîte de vitesses (3) et la machine électrique (15) sont refroidis par un circuit de refroidissement à eau (36) commun.
